# EUROPEAN PATENT SPECIFICATION

(11) **EP 1 831 637 B1**
(45) Date of publication and mention of the grant of the patent: **06.08.2008**
(21) Application number: 05818579.4
(22) Date of filing: 08.12.2005
(51) Int. Cl.: G01B 3/10

(54) **TAPE MEASURE WITH TWO WINDING HANDLES**
BANDMASS MIT ZWEI WINDEGRIFFEN
METRE A RUBAN A DEUX POIGNEES D'ENROULEMENT

(30) Priority: 09.12.2004 GB 0427007
(43) Date of publication of application: 12.09.2007
(73) Proprietor: FISCO TOOLS LIMITED, Rayleigh Essex SS6 7XD (GB)
(72) Inventor: LEE, Barry, Howard, Rayleigh Essex SS6 8HB (GB)
(74) Representative: Carter, Stephen John
(86) International application number: PCT/GB2005/004750
(87) International publication number: WO 2006/061641

(56) References cited:
- EP-A- 0 724 133
- GB-A- 189 401 821
- GB-A- 191 309 015

## Description

### FIELD OF THE INVENTION

The present invention relates to tape measures of a type requiring a winding handle.

### BACKGROUND TO THE INVENTION

Tape measures for distances of 10 metres or greater (so-called 'long tapes') tend to differ from those for shorter distances in that the measure blade is not sprung so that the blade returns to a spooled condition, but instead have a winding handle to spool the blade. Winding return handles can also be provided on tapes for a shorter distance.

One conventional form of 'long tape' measure has a case with first and second circular side walls spaced apart from each other with their peripheries connected by an edge wall, so as to define a generally disc shaped enclosure. A winding drum or spool is rotatably mounted between the side walls, the axis of the drum passing through the centre of both side walls. One side face of the drum is exposed at a central aperture in the first side wall. A winding handle is attached to the exposed part of the side of the winding drum. The other side face of the drum may be exposed in a similar fashion on the second side wall. The drum may be a single moulding trapped within the case, or may be formed from two halves which are inserted through apertures in the first and second side walls.

The measuring tape is attached at one end to the drum so that it can be coiled around the drum within the casing. It can be drawn out from the casing through a slot in the edge wall of the casing. To unwind the tape, the required length of tape is simply pulled out through the slot. To rewind the tape, the casing is gripped and the winding handle turned in the appropriate direction.

Another conventional form of 'long tape' measure does not have an enclosing case, but rather a frame on which the winding drum or spool is mounted. As in the above form of measure, a winding handle is attached to the winding drum to allow the tape to return to its spooled condition. Sometimes, the winding drum is mounted to the frame by means of a centre moulding. In this instance, the winding handle is attached to the centre moulding.

Many 'long tapes' are used by professionals, such as surveyors, estates agents and builders, and are often shared by a number of people. The present inventors have realised that the sharing a single measure can cause difficulties when different users wish to wind the tape back onto the spool in different manners. Long tapes tend to be designed to be held in the user's left hand, such that the winding handle is operated by the user's right hand. However, some users prefer to hold the tape in their right hand and operate the winding handle with their left hand. This is difficult as, with conventional tapes, the measuring blade is then upside down as it enters the casing, causing it to twist. Some tape measures solve this problem by having a winding handle that can be mounted on either side of the measure, but this is not convenient for a measure which is shared as the winding handle would be continually changed from one side to the other.

### SUMMARY OF THE INVENTION

The present inventors have solved this problem by providing a tape measure with a winding handle on both sides.

According, the present invention provides a tape measure having a rotatably mounted winding drum or reel, a measuring tape attached to the drum so as to be coilable thereon, and a winding handle acting on each side of the drum.

Both winding handles are preferably retractable, to avoid impact whilst the tape is being extended, and such that when used for winding the tape back, only one handle need be extended.

### BRIEF DESCRIPTION OF THE DRAWINGS

An embodiment of the present invention will now be described by way of example only with reference to the accompanying drawings, in which:-
Fig. 1 is a plan view of a tape measure viewed from a first side, shown with the first winding handle retracted;
Fig. 2 is a plan view of the tape measure viewed from the first side, shown with the first winding handle extended;

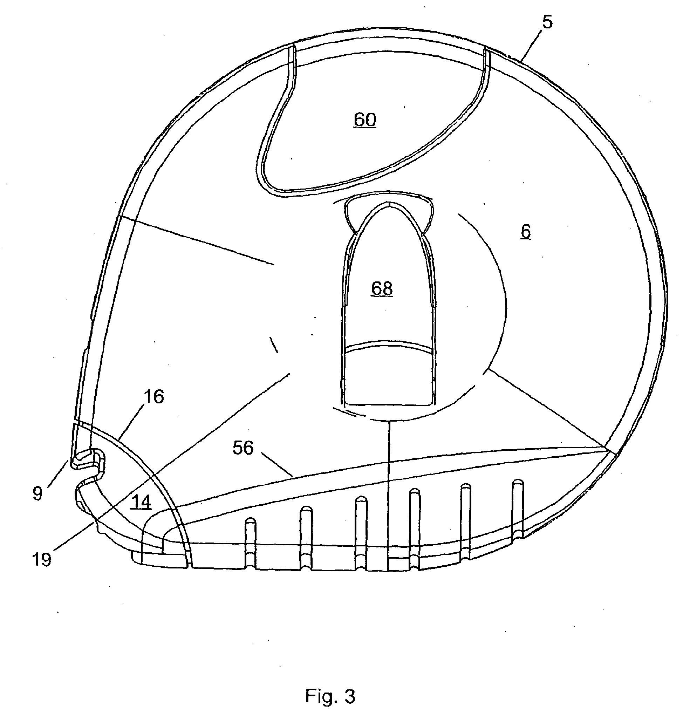

Fig. 3 is a plan view of the tape measure viewed from a second side, shown with the second winding handle retracted;

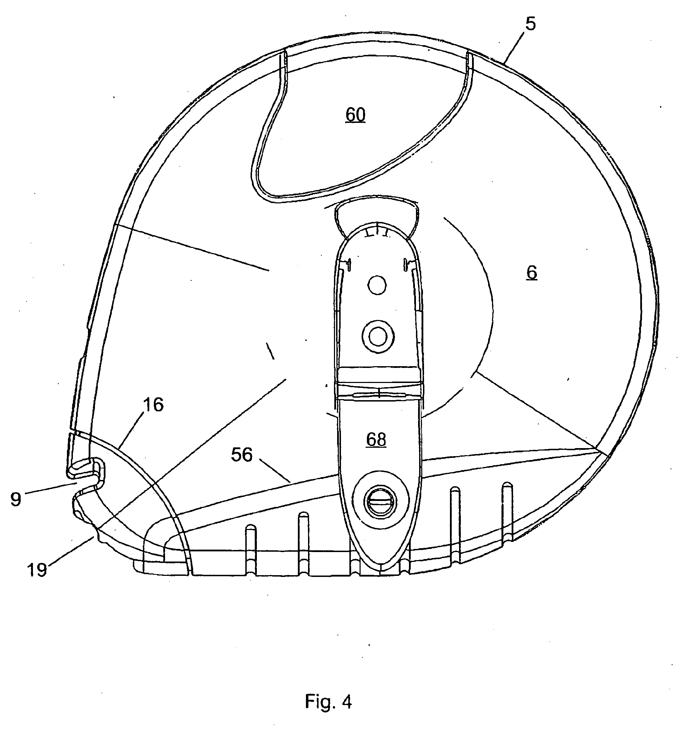

Fig. 4 is a plan view of the tape measure viewed from the second side, shown with the second winding handle extended;
Fig. 5 is a plan view of an edge of the tape measure, shown with the first and second winding handles retracted;
Fig. 6 is a plan view of an edge of the tape measure, shown with the first winding handle extended and the second winding handle retracted;
Fig. 7 is a plan view of an edge of the tape measure, shown with the first and second winding handles extended; and
Fig. 8 is a cross-sectional view of a winding drum contained in the tape measure.

### DETAILED DESCRIPTION OF THE INVENTION

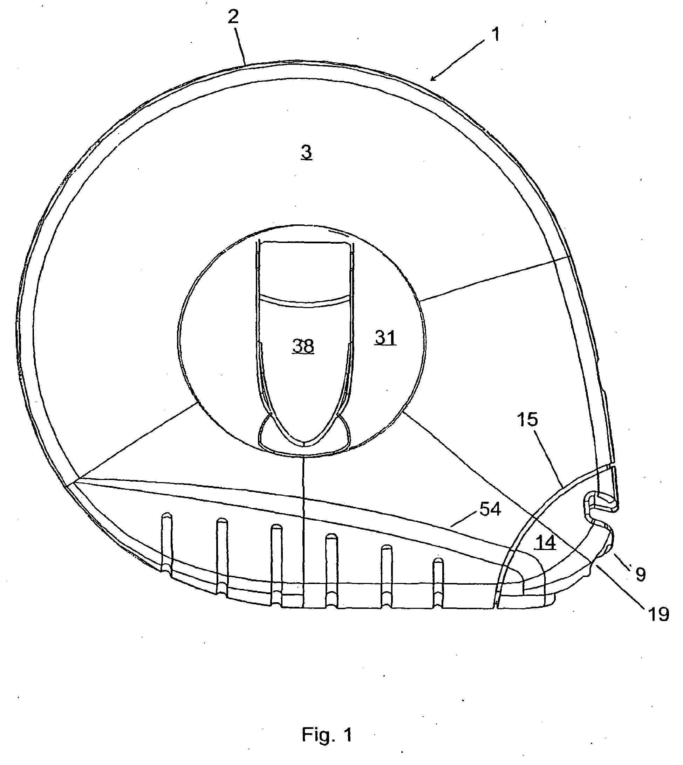

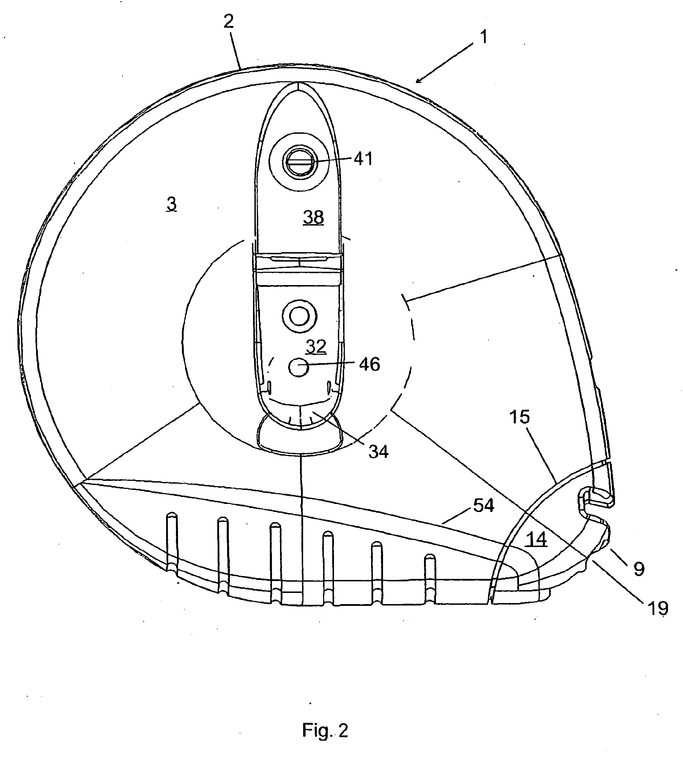

As shown in Figs. 1 and 2, the tape measure comprises a casing 1 made from three injection moulded plastic parts. The two main parts are first and second casing halves 2, 5. Each half comprises a teardrop-shaped side wall 3, 6 which is slightly outwardly dished. The periphery of each side wall defines the circumference of a sector of a circle - approximately three-quarters, i.e. subtending approximately 270°. At each end of that sector, the periphery follows an approximately tangential path towards the point of the teardrop shape. In this embodiment, the radius of the circle is approximately 8cm, similar to that for conventional tape measure cases. Of course other embodiments may have different sizes depending on the length and thickness of the tape measure blade.

The casing has an edge wall formed from half walls (4, 7) which runs around the periphery of respective side walls 3, 6. The two casing halves 2, 5 may be joined together by screws (not shown), or by ultrasonic welding, or by snap-fitting projections, as described in GB 2 369 103.

The tangential periphery of each casing half 2, 5 does not extend to the point 9 of the teardrop. Instead, a curved edge 15, 16 on each casing half 2, 5 meets the periphery at approximately 90°.

A one-piece moulding 14 forms the tip of the teardrop shaped casing. As can be seen, the moulding 14 is shaped to provide a smooth continuation of the casing halves 2, 5. The moulding has a skirt (not shown) joined to the exposed parts of the moulding, such that when the casing is assembled the skirt lies against inside surfaces of the casing halves 2, 5 and their edges 15, 16 fit against a step. In order to assist in holding the moulding in place, the inside faces of the casing halves 2, 5 incorporate studs which engage holes in the skirt.

The peripheral wall of the moulding 14 includes a slot 19 through which the measuring tape can be drawn out, for use.

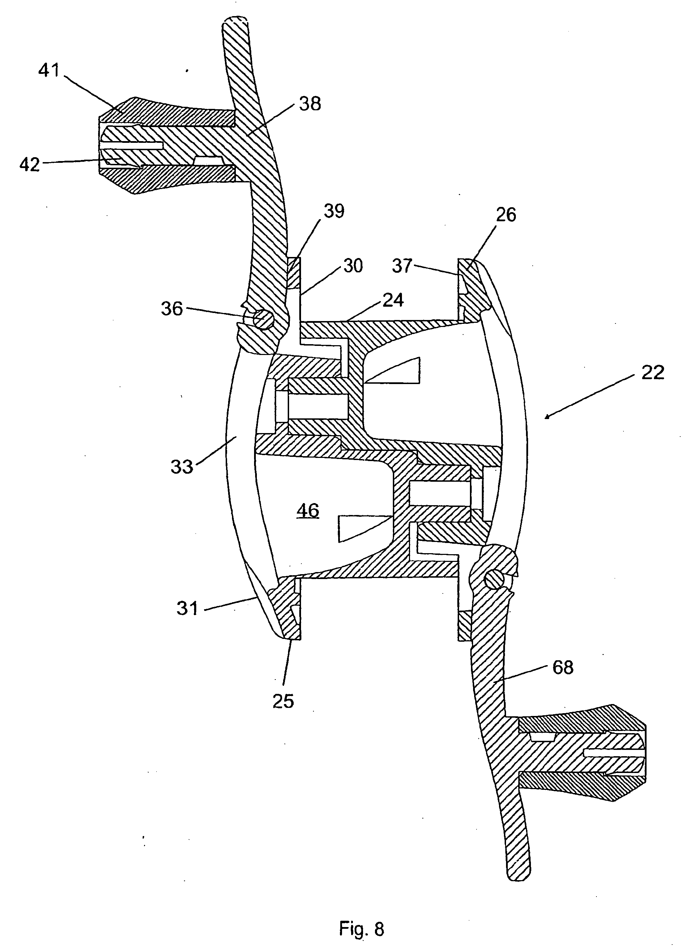

A winding drum 22, shown in cross-section in Fig. 8, fits within the casing 1. One end of the measuring tape (not shown) is attached to this drum 22, and the tape coils up around the outer surface 24 of this drum. This measuring tape may be made of material conventionally used for long tapes, such as steel or glass-reinforced fibre.

The drum 22 comprises two parts 25, 26 which screw together through holes in the casing haves 2, 5. Annular surfaces 30 and 37 abut the outer of the casing around the holes thereby retaining the drum 22 axially within the case.

One side of the drum 22 has a slightly domed surface 31. A channel 32 bounded by parallel side walls 33 runs diametrically across the domed surface 31. A lip 34 with a concave inner wall 35 closes one end of the channel. Pin 36 runs perpendicularly between the two channel side walls near, but spaced from, the opposite end of the channel 32. One end of a first winding handle 38 is hinged on this pin 36.

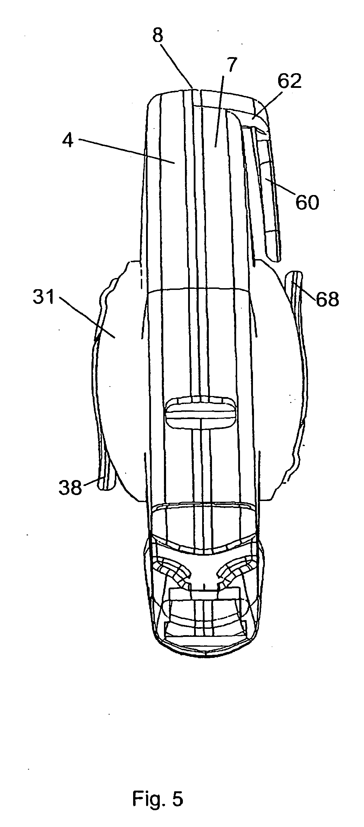

As shown in Figs. 1 and 5 when the first winding handle is not in use it lies within the channel 32 and its upper surface is generally flush with the domes surface 31 of the drum 22. When it is required to wind in the tape, the handle 38 is turned outwards around the hinge pin 36 until its surface 40 abuts a stop surface 39 on the floor of the channel 32. This exposes a winding knob 41 rotatable on a spindle 42 projecting from the handle. When the handle 38 is not in use this spindle 42 and winding knob fit into a recess 46 in the drum 22.

The second winding handle 68 operates in exactly the same manner as the first winding handle 38.

The casing halves 2, 5 include respective zones, opposite to each other, in which the two halves are specially shaped to assist the user in gripping the casing. These zones extend radially inwardly from the edge walls 4, 7 part way towards the central regions of the faces 3, 6.

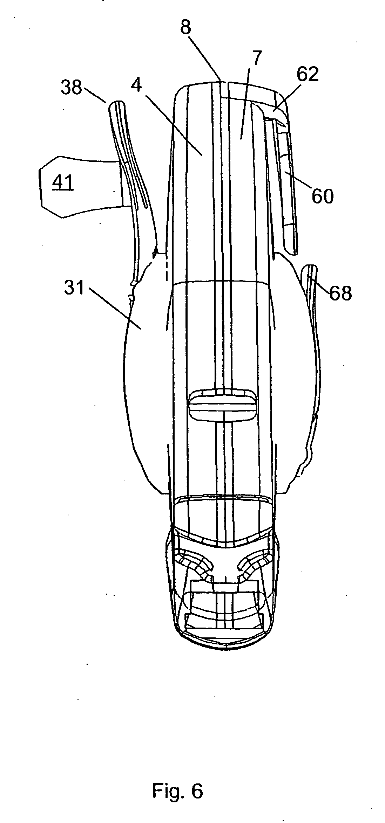

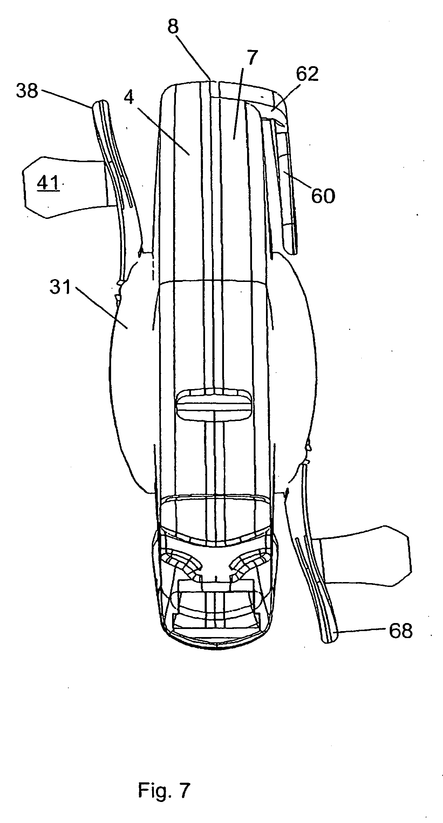

As seen in Figs. 5, 6 and 7, these shaped zones of the casing halves 2, 5 incorporate slight axially outward bulges 53 and 55. These meet the remainder of the faces 3, 6 of the casing along curved lines 54, 56.

As shown in the figures, a belt clip is provided by a tongue 60 overlies a matching area cut out from the side wall 6. It is at an approximately uniform spacing from the level of the side wall, thus defining a slot between the tongue 60 and the side wall 6. The tongue 60 is attached to the remainder of the casing half 5 by an extension 62 from the edge wall 7.

To facilitate moulding the area of the side wall 6 directly beneath the tongue 60 is cut out. The appearance is that this area of the side wall has been displaced outwards to form the tongue 60.

The tongue can be hooked over the belt of a user. The belt then fits in the slot between the tongue 60 and the side wall 6.

## Claims

1. A tape measure having a rotatably mounted winding drum or reel, and a measuring tape attached to the drum so as to be coilable thereon, **characterised in that** the tape measure has two winding handles (38, 68), one handle acting on each side of the drum.

2. A tape measure according to claim 1, wherein at least one winding handle is retractable.

3. A tape measure according to claim 2; wherein both winding handles are retractable.

## Patentansprüche

1. Maßband mit einer drehbar angebrachten Wickeltrommel oder -spule und einem Messband, das an der Trommel derart befestigt ist, dass es auf diese wickelbar ist,
**dadurch gekennzeichnet, dass**
das Maßband zwei Wickelkurbelgriffe (38, 68) aufweist, wobei auf jeder Seite der Trommel ein Kurbelgriff wirkt.

2. Maßband nach Anspruch 1, worin zumindest ein Wickelkurbelgriff einziehbar ist.

3. Maßband nach Anspruch 2, worin beide Wickelkurbelgriffe einziehbar sind.

## Revendications

1. Mètre à ruban ayant un tambour d'enroulement ou bobine monté en rotation et un mètre à ruban fixé au tambour de façon à pouvoir être enroulé sur celui-ci, **caractérisé en ce que** le mètre à ruban possède deux poignées d'enroulement (38, 68), une poignée agissant sur chaque côté du tambour.

2. Mètre à ruban selon la revendication 1, où au moins une poignée d'enroulement est rétractable.

3. Mètre à ruban selon la revendication 2, où les deux poignées d'enroulement sont rétractables.
